Europäisches Patentamt

European Patent Office

Office européen des brevets

(11) Veröffentlichungsnummer: **0 398 167**
**A2**

## (12) EUROPÄISCHE PATENTANMELDUNG

(21) Anmeldenummer: **90108860.9**

(22) Anmeldetag: **11.05.90**

(51) Int. Cl.⁵: **C08F 10/02, C08F 4/655**

(30) Priorität: **17.05.89 DE 3916028**
**26.10.89 DE 3935650**

(43) Veröffentlichungstag der Anmeldung:
**22.11.90 Patentblatt 90/47**

(84) Benannte Vertragsstaaten:
**BE DE ES FR GB IT NL**

(71) Anmelder: **HOECHST AKTIENGESELLSCHAFT**
**Postfach 80 03 20**
**D-6230 Frankfurt am Main 80(DE)**

(72) Erfinder: **Heinrich, Andreas, Dr.**
**Berliner Strasse 10**
**D-6238 Hofheim am Taunus(DE)**

(54) **Verfahren zur Herstellung von Ethylen(co-)polymeren.**

(57) Zur Homopolymerisation von Ethylen oder zur Copolymerisation von Ethylen mit anderen 1-Olefinen wird ein Katalysator verwendet, welcher aus einem Aluminiumtrialkyl und dem Gesamtprodukt aus der Reaktion eines in einem inerten Lösemittel gelösten Magnesiumalkoholats mit einer vierwertigen Übergangsmetallverbindung und einer aluminiumorganischen Verbindung und gegebenenfalls einem Elektronendonor besteht. Man erhält ein Polymer mit grobem Korn und hoher Schüttdichte.

EP 0 398 167 A2

## Verfahren zur Herstellung von Ethylen(co-)polymeren.

Die Erfindung bezieht sich auf ein Verfahren zur (Co-)polymerisation von Ethylen zu grobkörnigen Polymerpartikeln mit enger Korngrößenverteilung und hoher Schüttdichte durch Einsatz von Katalysatorteilchen, deren Trägerkomponente ein gelöstes Magnesiumalkoholat ist.

Verfahren, die als Ausgangsprodukte für Ziegler - Natta -Katalysatoren gelöste Magnesiumalkoholate vorsehen, sind bekannt.

So ist ein Katalysatorsystem bekannt, dessen Übergangsmetallkomponente durch Reaktion eines gelösten Magnesiumalkoholats mit Titantetrachlorid entsteht (vgl. EP 262790). Die Katalysatorkomponente wird zusammen mit einer Aluminiumverbindung zur Polymerisation von Olefinen, insbesondere von Propylen, verwendet.

Es ist auch bekannt, die lösliche Magnesiumverbindung durch Umsetzen von Magnesiummetall, Magnesiumhalogenid oder $Mg(OEt)_2$ mit einem Alkohol in Gegenwart eines Donors (z.B. Carbonsäuren, Glykolether) durchzuführen und dieses Reaktionsgemisch mit Titantetrachlorid umzusetzen. Man erhält eine Katalysatorkomponente, die zur Herstellung von grobkörnigen Polyethylen mit hoher Schüttdichte geeignet ist (vgl. EP 114526). Nachteilig an diesem Verfahren ist unter anderem der übermäßige Einsatz von Titantetrachlorid (fixiertes Ti zu eingesetztes Ti wie 1 zu 500 bis 2000).

Weiterhin ist ein Verfahren zur Herstellung einer Katalysatorkomponente bekannt, bei welchem zunächst ein gelöstes Magnesiumdialkoxid, eine Siliciumverbindung und ein Elektronendonor zusammen reagieren und das Reaktionsprodukt mit einer Titanverbindung umgesetzt wird (vgl. EP 156 512). Diese Katalysatorkomponente wird zusammen mit einer aluminiumorganischen Verbindung zur Polymerisation von Propylen eingesetzt.

Die Reaktion der Ausgangsstoffe führt zu einem Rohprodukt, das durch mehrere Waschoperationen mit organischen Lösemitteln gereinigt werden muß.

Die Aufgabe bestand darin, ein einfaches Verfahren zur Katalysatorherstellung zu finden, das es ermöglicht, Katalysatoren herzustellen, die ein Polymer mit großem mittleren und einheitlichen Partikeldurchmesser und mit hoher Schüttdichte erzeugen.

Es wurde nun gefunden, daß diese Aufgabe gelöst werden kann, wenn man ein gelöstes Magnesiumalkoholat mit einer Titanverbindung und danach mit einer Aluminiumverbindung reagieren läßt. Modifizierung des Herstellungsverfahrens sowie der Einsatz von Elektronendonoren verbessert die Schüttdichte der Polymerpartikel.

Die Erfindung betrifft somit ein Verfahren zur Herstellung eines Ethylenpolymers mit einheitlicher grober Partikelform und hoher Schüttdichte durch Polymerisation von Ethylen oder von Ethylen mit bis zu 10 Gew.-%, bezogen auf die Gesamtmenge der Monomeren, eines 1-Olefins der Formel $R^9$-$CH=CH_2$, worin $R^9$ einen geradkettigen oder verzweigten Alkylrest mit 1 bis 12 C-Atomen bedeutet, in Suspension, in Lösung oder in der Gasphase, bei einer Temperatur von 20 bis 120 °C und einem Druck von 2 bis 60 bar, in Gegenwart eines Katalysators bestehend aus dem Reaktionsprodukt eines Magnesiumalkoholats mit einer vierwertigen Übergangsmetallverbindung und einer aluminiumorganischen Verbindung dadurch gekennzeichnet, daß die Polymerisation durchgeführt wird in Gegenwart eines Katalysators, welcher aus

a) dem Gesamtprodukt aus der Reaktion

a1) eines in einem inerten Lösemittel gelösten Magnesiumalkoholats der Formel I
$Mg(OR^1)(OR^2)$    (I),
worin $R^1$ und $R^2$ entweder gleich sind und einen Rest $-CH_2CHR^6R^7$ oder $-(CH_2)_nOR^8$ bedeuten, wobei $R^6$ ein Wasserstoffatom oder ein $C_1$-$C_6$-Alkylrest, $R^7$ ein $C_2$-$C_6$-Alkylrest, $R^8$ ein $C_1$-$C_4$-Alkylrest und n eine ganze Zahl von 2 bis 6 ist, oder $R^1$ und $R^2$ verschieden sind, $R^1$ die vorgenannte Bedeutung hat und $R^2$ einen $C_1$-$C_{20}$-Alkylrest bedeutet, mit

a2) einer vierwertigen Übergangsmetallverbindung der Formel II
$MX_m(OR^3)_{4-m}$    (II),
worin M Titan, Zirkon oder Hafnium, $R^3$ einen $C_1$-$C_9$-Alkylrest und X ein Halogenatom bedeutet und m eine ganze Zahl von null bis 4 ist,

a3) einer aluminiumorganischen Verbindung der Formel III $AlR^4_q (OR^5)_p X_{3-q-p}$    (III),
worin $R^4$ und $R^5$ gleich oder verschieden sind und einen $C_1$-$C_6$-Alkylrest, X ein Halogenatom, q eine Zahl von null bis 3 und p eine Zahl von null bis 1 bedeuten, im Verhältnis Mg:Ti:Al wie 1 zu 0,05 bis 2 zu 0,3 bis 4, und

b) einem Aluminiumtrialkyl mit 1 bis 6 C-Atomen in den Alkylresten oder dem Umsetzungsprodukt eines Aluminiumtrialkyls oder Aluminiumdialkylhydrids mit Isopren besteht.

Zur Herstellung der erfindungsgemäß einzusetzenden Mischkatalysatorkomponente a wird ein Magnesiumalkoholat der Formel I
$Mg(OR^1)(OR^2)$    (I)
verwendet. In dieser Formel sind $R^1$ und $R^2$ gleich oder verschieden. Wenn $R^1$ und $R^2$ gleich sind, bedeuten sie einen Rest $-CH_2CHR^6R^7$ oder einen Rest $-(CH_2)_nOR^8$, wobei $R^6$ ein Wasserstoffatom, oder ein $C_1$-$C_6$-, vorzugsweise $C_1$-$C_3$-Alkylrest, $R^7$

2

ein $C_2$-$C_6$-, vorzugsweise $C_3$-$C_5$-Alkylrest, $R^8$ ein $C_1$-$C_4$-, vorzugsweise $C_1$-$C_2$-Alkylrest und n eine ganze Zahl von 2 bis 6 ist. Wenn $R^1$ und $R^2$ verschieden sind, hat $R^1$ die vorgenannte Bedeutung und $R^2$ ist ein $C_1$-$C_{20}$-, vorzugsweise $C_3$-$C_{10}$-Alkylrest.

Beispiele für derartige Magnesiumalkoholate sind
Magnesiumbis-(2-methyl-1-pentyloxid),
Magnesiumbis-(2-methyl-1-hexyloxid),
Magnesiumbis-(2-methyl-1-heptyloxid),
Magnesiumbis-(2-ethyl-1-pentyloxid),
Magnesiumbis-(2-ethyl-1-hexyloxid),
Magnesiumbis-(2-ethyl-1-heptyloxid),
Magnesiumbis-(2-propyl-1-heptyloxid),
Magnesiumbis-(2-methoxy-1-ethoxid),
Magnesiumbis-(3-methoxy-1-propyloxid),
Magnesiumbis-(4-methoxy-1-butyloxid),
Magnesiumbis-(6-methoxy-1-hexyloxid),
Magnesiumbis-(2-ethoxy-1-ethoxid),
Magnesiumbis-(3-ethoxy-1-propyloxid),
Magnesiumbis-(4-ethoxy-1-butyloxid),
Magnesiumbis-(6-ethoxy-1-hexyloxid),
Magnesiumbis-pentyloxid,
Magnesiumbis-hexyloxid.

Brauchbare Magnesiumalkoholate sind auch die Umsetzungsprodukte von Magnesiummetall, Magnesiumalkylen oder Magnesiumalkoholaten mit Alkoholen $R^1OH$ ($R^1$ wie vorstehend). Bevorzugt von diesen Produkten ist das Umsetzungsprodukt eines Magnesiumalkoholats mit einem Alkohol $R^1OH$ in Gegenwart von 0,02-0,2 mol-% Triethylaluminium (als Viskositätserniedriger) bei 100 bis 140°C.

Das gelöste Magnesiumalkoholat wird mit einer vierwertigen Übergangsmetallverbindung der Formel II

$$MX_m(OR^3)_{4-m} \quad (II),$$

worin M Titan, Zirkon oder Hafnium, vorzugsweise Titan oder Zirkon, $R^3$ einen Alkylrest mit 1 bis 9, vorzugsweise 1 bis 4 C-Atomen, und X ein Halogenatom, vorzugsweise Chlor, bedeutet, und m null bis 4, vorzugsweise 2 bis 4 ist, umgesetzt. Die vierwertige Übergangsmetallverbindung der Formel II oder ein Addukt derselben mit einem der erfindungsgemäß zu verwendenden Elektronendonatoren ist in Kohlenwasserstoffen löslich.

Beispielsweise seien genannt:
$TiCl_4$, $TiCl_3(OC_2H_5)$, $TiCl_2(OC_2H_5)_2$, $TiCl(OC_2H_5)_3$, $Ti(OC_2H_5)_4$, $TiCl_3(OC_3H_7)$, $TiCl_2(OC_3H_7)_2$, $TiCl(OC_3H_7)_3$, $Ti(OC_3H_7)_4$, $TiCl_3(OC_4H_9)$, $TiCl_2(OC_4H_9)_2$, $TiCl(OC_4H_9)_3$, $Ti(OC_4H_9)_4$, $TiCl_3(OC_6H_{13})$, $TiCl_2(OC_6H_{13})_2$, $TiCl(OC_6H_{13})_3$, $Ti(OC_6H_{13})_4$, $Ti(OC_9H_{19})_4$, $TiBr_4$, $TiBr_3(OR^3)$, $TiBr_2(OR^3)_2$, $TiBr(OR^3)_3$, $TiI_4$, $TiI_3(OR^3)$, $TiI_2(OR^3)_2$, $TiI(OR^3)_3$, $ZrCl_4$, $ZrBr_4$, $ZrI_4$, $Zr(OC_2H_5)_4$, $Zr(OC_3H_7)_4$, $Zr(OC_4H_9)_4$, $ZrCl_2(OC_3H_7)_2$, vorzugsweise werden $TiCl_4$, $ZrCl_4$, $Ti(OC_2H_5)_4$, $Ti(OC_3H_7)_4$, $Zr(OC_3H_7)_4$, $Ti(OC_4H_9)_4$, und $Zr(OC_4H_9)_4$ verwendet.

Der dritte Reaktionspartner zur Herstellung der Katalysatorkomponente a ist eine aluminiumorganische Verbindung der Formel III

$$AlR^4{}_q(OR^5)_pX_{3-q-p} \quad (III),$$

worin $R^4$ und $R^5$ gleich oder verschieden sind und einen Alkylrest mit 1 bis 6, vorzugsweise 1 bis 4 Kohlenstoffatomen, X ein Halogenatom, vorzugsweise Chlor, und q eine Zahl von null bis 3, vorzugsweise 1 bis 2, und p eine Zahl von null bis 1, vorzugsweise kleiner 0,5 bedeuten.

Geeignete aluminiumorganische Verbindungen sind:
$Al(C_2H_5)_3$, $Al(C_2H_5)_2Cl$, $Al_2(C_2H_5)_3Cl_3$, $Al(C_2H_5)Cl_2$, $AlCl_3$, $Al(C_3H_7)_3$, $Al(C_3H_7)_2Cl$, $Al_2(C_3H_7)_3Cl_3$, $Al(C_3H_7)Cl_2$, $Al(C_4H_9)_3$, $Al(C_4H_9)_2Cl$, $Al_2(C_4H_9)_3Cl_3$, $Al(C_4H_9)Cl_2$,
sowie Mono- und Dihalogenide verschiedener Zusammensetzung. Vorzugsweise werden aus dieser Gruppe $Al(C_2H_5)_2Cl$, $Al_2(C_2H_5)_3Cl_3$ und $Al(C_2H_5)Cl_2$ verwendet.

Die Bildung der Katalysatorkomponente a erfolgt auf folgenden möglichen Wegen, wobei jeder Reaktionspartner auch als Mehrzahl gleichartiger Verbindungen eingesetzt werden kann.

i) Zu einer Lösung des Magnesiumalkoholats wird die Lösung der Übergangsmetallverbindung gegeben und der entstehende Feststoff sodann mit einer aluminiumorganischen Verbindung der Formel III umgesetzt.

ii) Zu einer Lösung der Übergangsmetallverbindung wird die Lösung des Magnesiumalkoholats gegeben und der entstehende Feststoff sodann mit einer àluminiumorganischen Verbindung der Formel III umgesetzt.

iii) Zu einer Lösung der Übergangsmetallverbindung wird die Lösung des Magnesiumalkoholats gegeben und die Reaktionsmischung anschließend mit einer Lösung der Übergangsmetallverbindung zusammengebracht und der entstehende Feststoff danach mit einer aluminiumorganischen Verbindung der Formel III umgesetzt.

iv) Die Lösung eines Magnesiumalkoholats und die Lösung der Übergangsmetallverbindung werden gleichzeitig in vorgelegtes Lösemittel gegeben und die entstehende Suspension mit einer aluminiumorganischen Verbindung der Formel III umgesetzt.

v) Die Lösung eines Magnesiumalkoholats, die Lösung der Übergangsmetallverbindung und eine aluminiumorganische Verbindung der Formel III werden gleichzeitig in vorgelegtem Dispergiermittel miteinander umgesetzt.

Weiterhin gibt es Herstellungswege, die sich durch Kombination der Wege i) bis v) ergeben. Als Beispiele für derartige Kombinationen seien die Wege vi) bis viii) genannt.

vi) Die Lösung eines Magnesiumalkoholats und die Lösung der Übergangsmetallverbindung werden gleichzeitig zu einer vorgelegten Lösung einer Übergangsmetallverbindung gegeben und die entstehende Suspension anschließend mit der aluminiumorganischen Verbindung der Formel III umgesetzt.

vii) Die Lösung eines Magnesiumalkoholats, die Lösung der Übergangsmetallverbindung und eine aluminiumorganische Verbindung der Formel III werden gleichzeitig zu einer vorgelegten Lösung einer Übergangsmetallverbindung gegeben.

viii) Die Lösung eines Magnesiumalkoholats und die Lösung einer Übergangsmetallverbindung werden gleichzeitig in vorgelegtes Lösemittel gegeben und die entstehende Suspension nacheinander mit der Lösung eines Magnesiumalkoholats, der Lösung einer Übergangsmetallverbindung und einer aluminiumorganischen Verbindung der Formel III umgesetzt.

Als vierter Reaktionspartner zur Herstellung der Katalysatorkomponente a kann ein Elektronendonor eingesetzt werden. Dieser Elektronendonor ist ein aliphatischer oder alicyclischer Ether, ein aliphatischer Ester, ein aliphatischer Aldehyd oder eine aliphatische Carbonsäure. Beispiele für derartige Elektronendonoren (ED) sind: Dimethylether, Diethylether, Di-n-propylether, Di-n-butylether, Di-i-amylether, Tetrahydrofuran, Dioxan, Ethylacetat, Butylacetat, Essigsäure, vorzugsweise werden Diethylether, Dibutylether und Ethylacetat verwendet.

Der Elektronendonor wird vor oder während der Reaktion mindestens einem der drei anderen Reaktionspartner zugesetzt.

Die Umsetzung des Magnesiumalkoholats mit der vierwertigen Übergangsmetallverbindung erfolgt bei einer Temperatur von -50 bis 150 °C, vorzugsweise bei -20 bis 120 °C, innerhalb von 0,1 bis 10 Stunden, vorzugsweise 0,13 bis 4 Stunden. Die Umsetzung mit der aluminiumorganischen Verbindung erfolgt bei einer Temperatur von -50 bis 150 °C, vorzugsweise bei -20 bis 130 °C, besonders bevorzugt 20 bis 120 °C, innerhalb von 0,1 bis 10 Stunden, vorzugsweise 0,25 bis 4 Stunden.

Als inerte Lösemittel für die vorgenannten Umsetzungen eignen sich aliphatische und cycloaliphatische Kohlenwasserstoffe wie Butan, Pentan, Hexan, Heptan, Cylcohexan, Isooctan, sowie aromatische Kohlenwasserstoffe wie Benzol und Xylol. Auch Benzin und hydrierte Dieselölfraktionen, die sorgfältig von Sauerstoff, Schwefelverbindungen und Feuchtigkeit befreit worden sind, können eingesetzt werden.

Magnesiumalkoholat, vierwertige Übergangsmetallverbindung (M), aluminiumorganische Verbindung der Formel III und Elektronendonor (ED) werden im Verhältnis Mg:M:Al:ED wie 1 zu 0,05 bis 2 zu 0,3 bis 4 zu 0 bis 2, vorzugsweise 1 zu 0,08 bis 1 zu 0,4 bis 3 zu 0 bis 1 umgesetzt.

Im Anschluß an die Umsetzung wird die Suspension der Katalysatorkomponente a null bis 48 Stunden, vorzugsweise null bis 16 Stunden, bei 0 bis 150 °C, vorzugsweise 60 bis 120 °C gerührt.

Die so hergestellte Suspension der Katalysatorkomponente a wird ohne Abtrennung des Dispergiermittels und der Nebenprodukte direkt zur Polymerisation verwendet.

Als Katalysatorkomponente b wird ein Aluminiumtrialkyl mit 1 bis 6 C-Atomen in den Alkylresten, wie z.B. Triethylaluminium, Triisobutylaluminium, Triisohexylaluminium oder das als Aluminiumisoprenyl bekannte Umsetzungsprodukt eines Aluminiumtrialkyls oder -dialkylhydrids mit Isopren verwendet. Bevorzugt sind Triethylaluminium und Aluminiumisoprenyl.

Die Polymerisation wird ein- oder zweistufig, vorzugsweise als Suspensionspolymerisation, in einem inerten Dispergiermittel durchgeführt. Als Dispergiermittel sind die gleichen organischen Lösemittel geeignet, wie sie zur Herstellung der Katalysatorkomponente a beschrieben wurden. Die Polymerisation in der Gasphase ist jedoch auch möglich. Die Polymerisationstemperatur beträgt 20 bis 120, bevorzugt 70 bis 90 °C; der Druck liegt im Bereich von 2 bis 60, vorzugsweise 4 bis 20 bar.

Für den Fall, daß die Reaktion zweistufig durchgeführt wird, liegt das Mengenverhältnis der in den Stufen 1 und 2 jeweils gebildeten Polyolefine im Bereich von 30 zu 70 bis 70 zu 30, wobei das in der Stufe 1 gebildete Polymer kontinuierlich in die Stufe 2 überführt wird. Das endgültige Polymergemisch wird kontinuierlich aus Stufe 2 abgezogen.

Mit dem erfindungsgemäß verwendeten Katalysatorsystem wird Ethylen oder Ethylen mit bis zu 10 Gew.-%, bezogen auf die Gesamtmonomermenge, eines 1-Olefins der Formel $R^9$-CH = CH$_2$, worin $R^9$ einen geradkettigen oder verzweigten Alkylrest mit 1 bis 12, vorzugsweise 1 bis 10 C-Atomen, bedeutet, polymerisiert. Beispiele sind Propylen, 1-Buten, 1-Penten, 1-Hexen, 1-Octen, 4-Methylpenten-1. Vorzugsweise werden Propylen, 1-Buten und 1-Hexen eingesetzt. Dabei wird das Comonomere vorzugsweise in der ersten Stufe, in welcher ein Polymerisat mit der höheren Molmasse entsteht, eingeführt.

Das Gesamtpolymerisat aus der zweiten Stufe wird in bekannter Weise vom Dispergiermittel abgetrennt und getrocknet.

Ein Vorteil des erfindungsgemäßen Verfahrens ist die sehr einfache Herstellung der Übergangsmetallkomponente des Katalysators. Diese wird durch einfaches Zusammenbringen der Einzelkomponenten unter den entsprechenden Reaktionsbedingungen erhalten.

Eine Wäsche mit einem inerten Kohlenwasserstoff entfällt. Dadurch entsteht auch keine Waschlauge, die in weiteren Prozeßschritten erst wieder zersetzt und unter Anfall von Abwasser aufgearbeitet werden muß.

Weiterhin treten auch bei längerem kontinuierlichen Betrieb keine Polymerablagerungen an den Kesselwänden und in den Verbindungsleitungen auf und der Gehalt des Produktes an Teilchen mit einer Korngröße unter 100 μm ist bedeutend geringer.

Der große Vorteil des erfindungsgemäßen Verfahrens besteht jedoch darin, daß das speziell modifizierte Magnesiumalkoholat einen Katalysator herzustellen erlaubt, der ein Ethylenpolymer mit einem sehr großen mittleren Korndurchmesser von 200 bis 700 μm und einer hohen Schüttdichte von mehr als 300 g/dm³, vorzugsweise von mehr als 350 g/dm³ erzeugt. Dadurch besitzt das Polymer eine geringere Restfeuchte, wodurch sich die Trocknungskosten verringern.

Die Korngrößenverteilung ist in hohem Maße einheitlich.

Weiterhin ist die Regelung der Molmasse der Polyolefine durch Wasserstoff wesentlich effizienter als bei herkömmlichen Verfahren durchführbar.

Die nachfolgenden Beispiele sollen die Erfindung erläutern.

Es bedeuten:

KZA$_{red}$ : Reduzierte Katalysator-Zeit-Aktivität
MFI 190/5 : Schmelzindex nach DIN 53735, gemessen bei 190°C bei einer Belastung von 5 kg
MFI 190/15
MFI 190/21,6
gemessen bei 190°C bei einer Belastung von 15 bzw. 21,6 kg
MFR 15/5 : MFI 190/15 / MFI 190/5
d$_{50}$ : mittlere Teilchengröße, erhalten durch Siebfraktionierung
SD : Schüttdichte, gemessen nach DIN 53468

**Beispiel 1**

In einem 1 dm³ Rührgefäß wurden unter Ausschluß von Luft und Feuchtigkeit eine Lösung von 0,1 mol Magnesiumbis(2-methyl-1-pentyloxid) in 200 cm³ einer Benzinfraktion (Kp. 140-170°C) vorgelegt. Unter Rühren und Argonüberlagerung wurden bei einer Temperatur von 25°C innerhalb von 120 min 100 cm³ einer 0,3 molaren Lösung von TiCl₄ in der Benzinfraktion zugegeben.

In die erhaltene Suspension wurden unter Rühren bei 80°C 100 cm³ einer 0,8 molaren Lösung von Ethylaluminiumsesquichlorid in der Benzinfraktion getropft, Dosierzeit 120 min. Es entstand ein rötlichbrauner Niederschlag.

Ein Teil dieser Suspension wurde mit der Benzinfraktion auf eine Ti-Konzentration von 0,01 mol/dm³ verdünnt. In einem 1,5 dm³-Stahlautoklaven, der mit 750 cm³ der Benzinfraktion beschickt wurde, wurden bei 85°C unter N₂-Überlagerung 3 cm³ einer 1 molaren Triethylaluminium-Lösung und 20 cm³ der Suspension gegeben. Danach wurden 3,15 bar Wasserstoff vorgelegt und 3,85 bar Ethylen aufgedrückt. Der Gesamtdruck von 7 bar wurde über 2 h gehalten, indem das verbrauchte Ethylen nachdosiert wurde. Die Polymerisation wurde durch Entspannen der Gase abgebrochen und das Polymere durch Filtration und Trocknung vom Dispergiermittel abgetrennt. Es wurden 213 g Polyethylen mit einem MFI 190/5 von 34,9 g/10 min und einem MFR 15/5 von 5,8 gebildet. Dies entspricht einer KZA$_{red}$ von 1385 g/mmol Ti•bar•h. Das Pulver hatte eine Schüttdichte von 340 g/cm³ und einen Feinkornanteil < 100 μm von 8 Gew.-%. Die mittlere Korngröße d$_{50}$ betrug 330 μm.

**Beispiel 2**

Zu 100 mmol Magnesiumbis(2-methyl-1-pentyloxid) in 400 cm³ der Benzinfraktion wurden bei 25°C in 2 h 9,47 g TiCl₄ in 100 cm³ der Benzinfraktion zudosiert. Bei 80°C erfolgte dann in 2 h die Zugabe von 80 mmol Ethylaluminiumsesquichlorid in 100 cm³ der Benzinfraktion. Die Polymerisation erfolgte wie in Beispiel 1 beschrieben. Es wurden 155,3 g Polyethylen, entsprechend einer KZA$_{red}$ von 1008 g/mmol Ti•bar•h., mit folgenden Produktdaten erhalten:
MFI 190/5 : 36,6 g/10 min; d$_{50}$ : 380 μm
MFI 190/15 : 199,1 g/10 min; Schüttdichte : 310 g/dm³
MFR 15/5 : 5,4 ; Feinanteil : 1 % < 100 μm

**Beispiel 3**

Zu 100 mmol Magnesiumbis(2-methyl-1-pentyloxid) in 200 cm³ der Benzinfraktion wurden bei 25°C in 2 h 7,7 cm³ TiCl₄ in 230 cm³ der Benzinfraktion zudosiert. Bei 80°C erfolgte danach 0,5 h die Zugabe von 14,88 g Ethylaluminiumsesquichlorid in 100 cm³ der Benzinfraktion.

Die Polymerisation erfolgte wie in Beispiel 1 beschrieben. Es wurden 83,4 g Polyethylen, entsprechend einer KZA$_{red}$ von 542 g/mmol Ti•bar•C₂H₄•h, mit folgenden Produktdaten erhalten:
MFI 190/5 : 25,4 g/10 min; d$_{50}$ : 490 μm
MFI 190/15 : 114,6 g/10 min; Schüttdichte : 350 g/dm³
MFR 15/5 : 4,5 ; Feinanteil : 9 % < 100 μm

**Beispiel 4**

- Zu 100 cm³ einer 0,2 molaren Lösung von TiCl₄ in der Benzinfraktion wurden bei 80°C innerhalb 1 h 22,2 g Magnesiumbis(2-methyl-1-pentyloxid) in 300 cm³ der Benzinfraktion und anschließend bei 80°C in 60 min 3,8 g TiCl₄ in 100 cm³ der Benzinfraktion zudosiert. Bei 80°C erfolgte in 1 h die Zugabe von 80 mmol Ethylaluminiumsesquichlorid in 128 cm³ der Benzinfraktion.

In einem 150 dm³ Kessel wurden 100 dm³ Dieselöl, 30 mmol Isoprenylaluminium und 30,4 cm³ der Dispersion gegeben. Anschließend wurden bei einer Polymerisationstemperatur von 85°C in der ersten Stunde 7,5 kg Ethylen, danach 5 kg Ethylen/h und soviel H₂ eingeleitet, daß der H₂-Gehalt im Gasraum 45 Vol.-% betrug. Zusätzlich wurden nach 60 min innerhalb von 1,5 h 350 cm³ 1-Buten eingeleitet. Nach 6,25 h wurde die Polymerisation bei einem Druck von 5,8 bar durch Entspannen beendet. Die Suspension wurde filtriert und das Polyethylenpulver durch Überleiten von heißem Stickstoff getrocknet.

Es wurden 32,4 kg Polyethylen erhalten. Dies entspricht einer Kontaktaktivität von 21,6 g PE/mmol Ti. Das Polyethylenpulver besaß einen MFI 190/5 von 21,4 g/10 min und einen MFR 15/5 von 4,9. Die Dichte war 0,959 g/cm³ und die Schüttdichte war 440 g/dm³. Die mittlere Korngröße $d_{50}$ betrug 320 μm bei einem Feinanteil 100 μm von 1 %.

## Beispiel 5

Zu 3,3 cm³ TiCl₄ in 100 cm³ der Benzinfraktion wurden bei 80°C in 2 h 300 cm³ einer 0,33 m Lösung von Magnesiumbis(2-methyl-1-pentyloxid) in der Benzinfraktion zudosiert. Bei 80°C erfolgte dann in 2 h die Zugabe von 80 mmol Ethylaluminiumsesquichlorid in 100 cm³ der Benzinfraktion.

Die Polymerisation erfolgte wie in Beispiel 1 beschrieben. Es wurden 196 g Polyethylen, entsprechend einer $KZA_{red}$ von 1273 g/mmol Ti•bar•C₂H₄•h, mit folgenden Produktdaten erhalten.
MFI 190/5 : 41 g/10 min; $d_{50}$ : 220 μm
MFI 190/15 : 221,0 g/10 min; Schüttdichte : 320 g/dm³
MFR 15/5 : 5,4 ; Feinanteil : 6 % < 100 μm

## Beispiel 6

Zu 5,7 g Ti(OEt)Cl₃ in 100 cm³ der Benzinfraktion wurden bei 25°C in 2 h 100 mmol Magnesiumbis(2-methyl-1-pentyloxid) in 200 cm³ Benzinfraktion zudosiert. Bei 80°C erfolgte in 2 h die Zugabe von 80 mmol Ethylaluminiumsesquichlorid in 100 cm³ der Benzinfraktion.

Die Polymerisation erfolgte wie in Beispiel 1 beschrieben. Es wurden 167,8 g Polyethylen, entsprechend einer $KZA_{red}$ von 1090 g/mmol Ti•bar•C₂H₄•h, mit folgenden Produktdaten erhalten.
MFI 190/5 : 34,9 g/10 min; $d_{50}$ : 260 μm
MFI 190/15 : 188,9 g/10 min; Schüttdichte : 300 g/dm³
MFR 15/5 : 5,4 ; Feinanteil : 3 % < 100 μm

## Beispiel 7

Zu 30 mmol TiCl₄ in 100 cm³ der Benzinfraktion wurden 3,9 g Di-n-butylether gegeben und bei 25°C wurden in 2 h 100 mmol Magnesiumbis(2-methyl-1-pentyloxid) in 300 cm³ der Benzinfraktion zudosiert. Bei 80°C erfolgte in 2 h die Zugabe von 18,1 cm³ Ethylaluminiumsesquichlorid in 100 cm³ der Benzinfraktion.

Die Polymerisation erfolgte wie in Beispiel 1 beschrieben. Es wurden 87,6 g Polyethylen, entsprechend einer $KZA_{red}$ von 569 g/mmol Ti•bar•C₂H₄•h, mit folgenden Produktdaten erhalten.
MFI 190/5 : 26,4 g/10 min; $d_{50}$ : 210 μm
MFI 190/15 : 131,4 g/10 min; Schüttdichte : 350 g/dm³
MFR 15/5 : 5,0 ; Feinanteil : 7 % < 100 μm

## Beispiel 8

Eine Lösung von 100 mmol Magnesiumbis(2-methyl-1-pentyloxid) und 20 mmol Ti(OEt)₄ in 300 cm³ der Benzinfraktion wurden in 2 h bei 80°C mit 100 mmol Ethylaluminiumsesquichlorid in 100 cm³ der Benzinfraktion versetzt.

Die Polymerisation erfolgte wie in Beispiel 1 beschrieben. Es wurden 123 g Polyethylen, entsprechend einer $KZA_{red}$ von 795 g/mmol Ti•bar•C₂H₄•h, mit folgenden Produktdaten erhalten.
MFI 190/5 : 13,9 g/10 min; $d_{50}$ : 220 μm
MFI 190/21,6 : 133,1 g/10 min; Schüttdichte : 340 g/dm³
MFR 21,6/5 : 9,6 ; Feinanteil : 5 % < 100 μm

## Beispiel 9

Zu 100 mmol Magnesiumbis(2-methyl-1-pentyloxid) in 200 cm³ der Benzinfraktion wurden bei 6 mmol Di-n-butylether gegeben und in 2 h 30 mmol TiCl₄ in 100 cm³ der Benzinfraktion bei 25°C zudosiert. Bei 80°C erfolgte dann in 2 h die Zugabe von 80 mmol Ethylaluminiumsesquichlorid in 100 cm³ der Benzinfraktion.

Die Polymerisation erfolgte wie in Beispiel 1 beschrieben. Es wurden 127 g Polyethylen, entsprechend einer $KZA_{red}$ von 827 g/mmol $Ti \cdot bar \cdot C_2H_4 \cdot h$, mit folgenden Produktdaten erhalten:
MFI 190/5 : 24,5 g/10 min; $d_{50}$ : 510 $\mu$m
MFI 190/15 : 137,5 g/10 min; Schüttdichte : 330 $g/dm^3$
MFR 15/5 : 5,6 ; Feinanteil : 0,3 % < 100 $\mu$m

**Beispiel 10**

Zu 100 mmol Magnesiumbis(2-methyl-1-pentyloxid) in 200 $cm^3$ der Benzinfraktion wurden 30 mmol Diethylether gegeben und bei 25$^\circ$C in 2 h 30 mmol $TiCl_4$ in 100 $cm^3$ der Benzinfraktion zudosiert. Bei 80$^\circ$C erfolgte dann in 0,5 h die Zugabe von 80 mmol Ethylaluminiumsesquichlorid in 100 $cm^3$ der Benzinfraktion.

Die Polymerisation erfolgte wie in Beispiel 1 beschrieben. Es wurden 141 g Polyethylen, entsprechend einer $KZA_{red}$ von 918 g/mmol $Ti \cdot bar \cdot C_2H_4 \cdot h$, mit folgenden Produktdaten erhalten:
MFI 190/5 : 28,2 g/10 min; $d_{50}$ : 370 $\mu$m
MFI 190/15 : 150,4 g/10 min; Schüttdichte : 360 $g/dm^3$
MFR 15/5 : 5,2 ; Feinanteil : 5 % < 100 $\mu$m

**Beispiel 11**

Zu 22,2 g Magnesiumbis(2-methyl-1-pentyloxid) in 200 $cm^3$ der Benzinfraktion wurde bei 25$^\circ$C in 3 h eine Lösung von 30 mmol Di-n-butylether und 30 mmol $TiCl_4$ in 100 $cm^3$ der Benzinfraktion zudosiert. Bei 80$^\circ$C erfolgte dann in 1 h die Zugabe von 100 $cm^3$ einer 0,8 m Lösung von Ethylaluminiumsesquichlorid in 100 $cm^3$ der Benzinfraktion.

Die Polymerisation erfolgte wie in Beispiel 1 beschrieben. Es wurden 94,5 g Polyethylen, entsprechend einer $KZA_{red}$ von 614 g/mmol $Ti \cdot bar \cdot C_2H_4 \cdot h$, mit folgenden Produktdaten erhalten:
MFI 190/5 : 32,6 g/10 min; $d_{50}$ : 390 $\mu$m
MFI 190/15 : 190,4 g/10 min; Schüttdichte : 350 $g/dm^3$
MFR 15/5 : 5,8 ; Feinanteil : 4 % < 100 $\mu$m

**Beispiel 12**

Zu der Lösung von 20 mmol $ZrCl_4$ und 37,2 mmol Di-n-butylether in 50 $cm^3$ der Benzinfraktion wurden bei 60$^\circ$C innerhalb 1 h 100 mmol Magnesiumbis(2-ethyl-1-hexyloxid) in 200 $cm^3$ der

Benzinfraktion und anschließend bei 60$^\circ$C in 60 min 20 mmol $TiCl_4$ in 100 $cm^3$ der Benzinfraktion zudosiert. Bei 80$^\circ$C erfolgte dann in 1 h die Zugabe von 80 mmol Ethylaluminiumsesquichlorid in 128 $cm^3$ der Benzinfraktion.

Die Polymerisation erfolgte wie in Beispiel 1 beschrieben. Es wurden 189,7 g Polyethylen, entsprechend einer $KZA_{red}$ von 901 g/mmol $Ti \cdot bar \cdot C_2H_4 \cdot h$, mit folgenden Produktdaten erhalten:
MFI 190/5 : 4,4 g/10 min; $d_{50}$ : 360 $\mu$m
MFI 190/15 : 23,3 g/10 min; Schüttdichte : 360 $g/dm^3$
MFR 15/5 : 5,4 ; Feinanteil : 0,7 % < 100 $\mu$m

**Beispiel 13**

In einem 2 $dm^3$-Rührgefäß wurden 250 mmol Magnesiumbis(2-methyl-1-pentyloxid) und 12,68 $cm^3$ Di-n-butylether in 500 $cm^3$ der Benzinfraktion bei 20$^\circ$C in 0,5 h 9,25 $cm^3$ $TiCl_4$ in 250 $cm^3$ der Benzinfraktion zudosiert. Bei 80$^\circ$C erfolgte in 0,5 h die Zugabe von 200 mmol Ethylaluminiumsesquichlorid in 250 $cm^3$ der Benzinfraktion. Anschließend wurde die Suspension noch weitere 10 h bei 60$^\circ$C gerührt.

Die Polymerisation erfolgte wie in Beispiel 1 beschrieben. Es wurden 138,3 g Polyethylen, entsprechend $KZA_{red}$ von 898 g/mmol $Ti \cdot bar \cdot C_2H_4 \cdot h$, mit folgenden Produktdaten erhalten:
MFI 190/5 : 27,0 g/10 min; $d_{50}$ : 440 $\mu$m
MFI 190/15 : 130,6 g/10 min; Schüttdichte : 380 $g/dm^3$
MFR 15/5 : 4,8 ; Feinanteil : 5 % < 100 $\mu$m

**Beispiel 14**

Zu 100 mmol Magnesiumbis(2-methyl-1-pentyloxid) in 200 $cm^3$ der Benzinfraktion wurden bei 25$^\circ$C in 1 h 30 mmol $TiCl_4$ in 100 $cm^3$ der Benzinfraktion zudosiert. Bei 80$^\circ$C erfolgte dann in 0,5 h die Zugabe von 80 mmol Ethylaluminiumsesquichlorid und 4 $cm^3$ Di-n-propylether in 100 $cm^3$ der Benzinfraktion.

Die Polymerisation erfolgte wie in Beispiel 1 beschrieben. Es wurden 134,7 g Polyethylen, entsprechend einer $KZA_{red}$ von 875 g/mmol $Ti \cdot bar \cdot C_2H_4 \cdot h$, mit folgenden Produktdaten erhalten:
MFI 190/5 : 31,8 g/10 min; $d_{50}$ : 340 $\mu$m
MFI 190/15 : 178,0 g/10 min; Schüttdichte : 360 $g/dm^3$
MFR 15/5 : 5,6 ; Feinanteil : 5 % < 100 $\mu$m

**Beispiel 15**

Zu einer Lösung von 0,6 cm³ TiCl₄ und 5 mmol Di-n-butylether in 50 cm³ der Benzinfraktion wurden bei 25°C innerhalb 1 h 22 g Magnesiumbis(2-methyl-1-pentyloxid) in 200 cm³ der Benzinfraktion und anschließend in 60 min 10 g TiCl₄ in 100 cm³ der Benzinfraktion zudosiert. Bei 80°C erfolgte sodann in 1 h die Zugabe von 18,1 mmol Ethylaluminiumsesquichlorid in 110 cm³ Hexan.

Die Polymerisation erfolgte wie in Beispiel 1 beschrieben. Es wurden 151,2 g Polyethylen, entsprechend einer $KZA_{red}$ von 982 g/mmol Ti·bar·$C_2H_4$·h, mit folgenden Produktdaten erhalten.

MFI 190/5 : 33,0 g/10 min; $d_{50}$ : 490 $\mu$m

MFI 190/15 : 159,4 g/10 min; Schüttdichte : 310 g/dm³

MFR 15/5 : 4,8 ; Feinanteil : 2 % < 100 $\mu$m

## Beispiel 16

Zu 100 cm³ der Benzinfraktion wurden bei 25°C in 1 h gleichzeitig 195 cm³ einer 0,52 m Lösung von Magnesiumbis(2-methyl-1-pentyloxid) in der Benzinfraktion und 3 cm³ TiCl₄ in 100 cm³ der Benzinfraktion zudosiert. Bei 80°C erfolgte dann in 0,5 h die Zugabe von 20 g Ethylaluminiumsesquichlorid in 100 cm³ der Benzinfraktion.

Die Polymerisation erfolgte wie in Beispiel 1 beschrieben. 210,4 g Polyethylen, entsprechend einer $KZA_{red}$ von 1366 g/mmol Ti·bar·$C_2H_4$·h, mit folgenden Produktdaten wurden erhalten:

MFI 190/5 : 37,4 g/10 min; $d_{50}$ : 390 $\mu$m

MFI 190/15 : 180,0 g/10 min; Schüttdichte : 300 g/dm³

MFR 15/5 : 4,8 ; Feinanteil : 2 % < 100 $\mu$m

## Beispiel 17

Zu 100 cm³ der Benzinfraktion wurden bei - 25°C in 2 h gleichzeitig 100 mmol Magnesiumbis-(2-methyl-1-pentyloxid) in 200 cm³ der Benzinfraktion, 30 mmol TiCl₄ in 100 cm³ der Benzinfraktion und 80 mmol Ethylaluminiumsesquichlorid in 100 cm³ der Benzinfraktion zudosiert. Anschließend wurde die entstandene Suspension in 105 min auf 100°C erhitzt und 10 min bei dieser Temperatur gerührt.

Die Polymerisation erfolgte wie in Beispiel 1 beschrieben. Es wurden 127,4 g Polyethylen, entsprechend einer $KZA_{red}$ von 1655 g/mmol Ti·bar·$C_2H_4$·h, mit folgenden Produktdaten erhalten:

MFI 190/5 : 16,2 g/10 min; $d_{50}$ : 270 $\mu$m

MFI 190/15 : 87,6 g/10 min; Schüttdichte : 280 g/dm³

MFR 15/5 : 5,4 ; Feinanteil : 0,2 % < 100 $\mu$m

## Beispiel 18

Zu 100 cm³ der Benzinfraktion wurden bei 80°C in 2 h gleichzeitig 100 mmol Magnesiumbis-(2-methyl-1-pentyloxid) in 200 cm³ der Benzinfraktion, 30 mmol TiCl₄ in 100 cm³ der Benzinfraktion und 80 mmol Ethylaluminiumsesquichlorid und 28 mmol Di-i-amylether in 100 cm³ der Benzinfraktion gegeben.

Die Polymerisation erfolgte wie in Beispiel 1 beschrieben. Es wurden 183,2 g Polyethylen, entsprechend einer $KZA_{red}$ von 1190 g/mmol Ti·bar·$C_2H_4$·h, mit folgenden Produktdaten erhalten:

MFI 190/5 : 24,8 g/10 min; $d_{50}$ : 250 $\mu$m

MFI 190/15 : 123,2 g/10 min; Schüttdichte : 350 g/dm³

MFR 15/5 : 5,0 ; Feinanteil : 4 % < 100 $\mu$m

## Beispiel 19

Zu 100 cm³ der Benzinfraktion wurden bei 20°C in 2 h gleichzeitig 100 mmol Magnesiumbis-(2-methyl-1-pentyloxid) in 200 cm³ der Benzinfraktion, 30 mmol TiCl₄ in 100 cm³ der Benzinfraktion und 80 mmol Ethylaluminiumsesquichlorid und 30 mmol Di-n-butylether in 100 cm³ der Benzinfraktion zudosiert.

Die Polymerisation erfolgte wie in Beispiel 1 beschrieben mit 5 mmol Isoprenylaluminium. Es wurden 207,6 g Polyethylen, entsprechend einer Kontaktaktivität von 10380 g/mmol Ti·bar·$C_2H_4$·h, mit folgenden Produktdaten erhalten:

MFI 190/5 : 8,8 g/10 min; $d_{50}$ : 350 $\mu$m

MFI 190/15 : 42,5 g/10 min; Schüttdichte : 320 g/dm³

MFR 15/5 : 5,0 ; Feinanteil : 0,2 % < 100 $\mu$m

## Beispiel 20

Zu 100 cm³ der Benzinfraktion wurden bei 20°C in 2 h gleichzeitig 100 mmol Magnesiumbis-(2-methyl-1-pentyloxid) und 10 mmol Triethylaluminium in 200 cm³ der Benzinfraktion, 30 mmol TiCl₄ in 100 cm³ der Benzinfraktion und 80 mmol Ethylaluminiumsesquichlorid in 100 cm³ der Benzinfraktion zudosiert. Anschließend wurde die Suspension 2 h bei 105°C (Rückfluß) getempert.

Die Polymerisation erfolgte wie in Beispiel 1 beschrieben mit 5 mmol Isoprenylaluminium und 0,01 mmol Katalysator. Es wurden 130,3 g Polyethylen, entsprechend einer $KZA_{red}$ von 1692 g/mmol Ti·bar·$C_2H_4$·h, mit folgenden Produktdaten erhalten:

MFI 190/5 : 9,0 g/10 min; $d_{50}$ : 410 $\mu$m

MFI 190/15 : 44,8 g/10 min; Schüttdichte : 320 g/dm$^3$

MFR 15/5 : 5,0 ; Feinanteil : 0,5 % < 100 $\mu$m

## Beispiel 21

In einem 2 dm$^3$-Rührgefäß wurden bei 25°C zu 100 mmol Magnesiumbis(2-methyl-1-pentyloxid) und 5 cm$^3$ Di-n-butylether in 200 cm$^3$ der Benzinfraktion 30 mmol TiCl$_4$ in 100 cm$^3$ der Benzinfraktion in 0,5 h zudosiert. Bei 80°C erfolgte in 0,5 h die Zugabe von 80 mmol Ethylaluminiumsesquichlorid in 100 cm$^3$ der Benzinfraktion.

In einem 150 dm$^3$ Kessel wurden 100 dm$^3$ Dieselöl, 75 mmol Triethylamin und 58 cm$^3$ der Dispersion gegeben. Anschließend wurden bei einer Polymerisationstemperatur von 85°C 7,5 kg Ethylen/h und soviel H$_2$ eingeleitet, daß der H$_2$-Gehalt im Gasraum 40 Vol.-% betrug. Zusätzlich wurden nach 90 min innerhalb von 60 min 800 cm$^3$ 1-Buten eingeleitet. Nach 5,1 h wurde die Polymerisation bei einem Druck von 4,3 bar durch Entspannen beendet. Die Suspension wurde filtriert und das Polyethylenpulver durch Überleiten von heißem Stickstoff getrocknet.

Es wurden 36,8 kg Polyethylen erhalten. Dies entspricht einer Kontaktzeitaktivität von 2420 g PE/mmol Ti·h. Das Polyethylenpulver besaß einen MFI 190/5 von 29,4 g/10 min und einen MFR 15/5 von 4,8. Die Dichte war 0,955 g/cm$^3$ und die Schüttdichte war 410 g/dm$^3$. Die mittlere Korngröße $d_{50}$ betrug 430 $\mu$m bei einem Feinanteil (< 100 $\mu$m) von 4 %.

## Beispiel 22

In einem 4 dm$^3$-Rührgefäß wurden bei 25°C zu 111,2 g Magnesiumbis(2-methyl-1-pentyloxid) und 150 mmol Di-n-butylether in 1000 cm$^3$ der Benzinfraktion und 16,5 cm$^3$ TiCl$_4$ in 500 cm$^3$ der Benzinfraktion in 0,5 h zudosiert. Bei 80°C erfolgte in 0,5 h die Zugabe von 400 mmol Ethylaluminiumsesquichlorid in 500 cm$^3$ der Benzinfraktion. Anschließend wurde der Ansatz noch weitere 45 min bei 80°C gerührt.

In einem 150 dm$^3$ Kessel wurden 100 dm$^3$ Dieselöl, 50 mmol Triethylaluminium und 39 cm$^3$ der Dispersion gegeben. Anschließend wurden bei einer Polymerisationstemperatur von 85°C 7,5 kg Ethylen/h und soviel H$_2$ eingeleitet, daß der H$_2$-Gehalt im Gasraum 38 Vol.-% betrug. Zusätzlich wurden nach 60 min innerhalb von 1,5 h 625 cm$^3$ 1-Buten eingeleitet. Nach 4,25 h wurde die Polymerisation bei einem Druck von 5,4 bar durch Entspannen beendet. Die Suspension wurde filtriert und das Polyethylenpulver durch Überleiten von heißem Stickstoff getrocknet.

Es wurden 30 kg Polyethylen erhalten. Dies entspricht einer Kontaktzeitaktivität von 15,2 kg PE/mmol Ti. Das Polyethylenpulver besaß einen MFI 190/5 von 19,5 g/10 min und einen MFR 15/5 von 5,2. Die Dichte war 0,957 g/cm$^3$ und die Schüttdichte war 420 g/dm$^3$. Die mittlere Korngröße $d_{50}$ betrug 500 $\mu$m bei einem Feinanteil (< 100 $\mu$m) von 3 %.

## Beispiel 23

Zu 80 cm$^3$ einer 0,1 molaren Lösung von TiCl$_4$ in der Benzinfraktion wurden bei 80°C innerhalb 1 h 23 g Magnesiumbis(2-ethyl-1-hexyloxid) und 20 mmol Ethylacetat in 200 cm$^3$ der Benzinfraktion und anschließend 60°C in 60 min 5 g TiCl$_4$ in 100 cm$^3$ der Benzinfraktion zudosiert. Bei 80°C erfolgte sodann in 1 h die Zugabe von 80 mmol Ethylaluminiumsesquichlorid in 128 cm$^3$ der Benzinfraktion.

Die Polymerisation erfolgte wie in Beispiel 1 beschrieben, allerdings bei einem H$_2$-druck von 2,3 bar abs.. Es wurden 142,1 g Polyethylen, entsprechend einer KZA$_{red}$ von 756 g/mmol Ti·bar·C$_2$H$_4$·h, mit folgenden Produktdaten erhalten:

MFI 190/5 : 4,7 g/10 min; $d_{50}$ : 410 $\mu$m

MFI 190/15 : 26,8 g/10 min; Schüttdichte : 320 g/dm$^3$

MFR 15/5 : 5,7 ; Feinanteil : 2 % < 100 $\mu$m

## Beispiel 24

Zu einer Lösung von 20 mmol Zr(i-OC$_3$H$_7$)$_4$ in 70 cm$^3$ der Benzinfraktion wurde bei 0°C innerhalb von 10 min 22,2 g Magnesiumbis(2-methyl-1-pentyloxid) in 200 cm$^3$ der Benzinfraktion und anschließend bei 40°C in 60 min 3 cm$^3$ TiCl$_4$ in 100 cm$^3$ Heptan zudosiert. Bei 80°C erfolgte in 2 h die Zugabe von 20 cm$^3$ Ethylaluminiumsesquichlorid in 100 cm$^3$ der Benzinfraktion.

Die Polymerisation erfolgte wie in Beispiel 1 beschrieben, allerdings bei einem H$_2$-Druck von 3,75 bar abs.. Es wurden 74,7 g Polyethylen, entsprechend einer KZA$_{red}$ von 574 g/mmol Ti·bar·C$_2$H$_4$·h, mit folgenden Produktdaten erhalten:

MFI 190/5 : 44,1 g/10 min; $d_{50}$ : 340 $\mu$m

MFI 190/15 : 13,8 g/10 min; Schüttdichte : 350 g/dm$^3$

Feinanteil : 1 % < 100 $\mu$m

## Beispiel 25

100 mmol Magnesium-(2-methyl-1-pentyloxid) in 300 cm³ der Benzinfraktion (Lösung A), 40 mmol TiCl₄ in 133 cm³ der Benzinfraktion (Lösung B) und 80 mmol Al₂Et₃Cl₃ in 100 cm³ der Benzinfraktion (Lösung C) wurden wie folgt umgesetzt.

Bei 20°C wurden in 40 min 100 cm³ der Lösung A und 33 cm³ der Lösung B gleichzeitig zu 200 cm³ der vorgelegten Benzinfraktion gegeben. Die entstehende Suspension wurde in 2 h gleichzeitig mit 200 cm³ der Lösung A, 100 cm³ der Lösung B sowie 100 cm³ der Lösung C umgesetzt. Im Anschluß wurde die Suspension 3 h bei 110°C gerührt.

Die Polymerisation erfolgte wie in Beispiel 1, allerdings bei einem $H_2$-Druck von 2 bar abs. und mit 5 mmol Isoprenylaluminium als Aktivator. Es wurden 189 g Polyethylen, entsprechend einer $KZA_{red}$ von 1890 g/mmol•h•bar mit folgenden Produktdaten erhalten:

MFI 190/5 : 1,4 g/10 min; $d_{50}$ : 450 $\mu$m
MFR 15/5 : 4,7 Schüttdichte : 0,35 g/dm³
MFR 21,6/5 : 9,0 Feinanteil : 0,1 % < 100 $\mu$m

### Beispiel 26

Zu einer Lösung von 0,1 mol Magnesiumbis(2-methyl-1-pentyloxid) in 250 cm³ der Benzinfraktion (Kp. 140-170°C) wurden bei einer Temperatur von 20°C innerhalb von 50 min 110 cm³ einer 0,3 molaren Lösung von TiCl₄ in der Benzinfraktion zugegeben.

Bei 95°C erfolgte die Zugabe von 128 cm³ einer 0,625 molaren Lösung von Ethylaluminiumsesquichlorid in der Benzinfraktion, Dosierzeit 60 min. Danach wurde der Ansatz weitere 12 h bei 110°C gerührt. Die Polymerisation erfolgte wie in Beispiel 1.

Es wurden 131 g Polyethylen mit einem MFI 190/5 von 22,5 g/10 min und einem MFR 15/5 von 4,7 gebildet. Dies entspricht einer $KZA_{red}$ von 850 g/mmol Ti•bar•h. Das Pulver hatte eine Schüttdichte von 300 g/dm³ und einen Feinkornanteil < 100 $\mu$m von 0,7 Gew.-%. Die mittlere Korngröße $d_{50}$ betrug 550 $\mu$m.

### Beispiel 27

Zu 50 mmol Magnesiumbis(2-methyl-1-pentyloxid) in 100 cm³ der Benzinfraktion wurden bei 25°C in 1 h 15 mmol TiCl₄ in 50 cm³ der Benzinfraktion zudosiert. Bei 80°C erfolgte in 2 h die Zugabe von 60 mmol Ethylaluminiumsesquichlorid in 50 cm³ der Benzinfraktion.

Die Polymerisation erfolgte wie in Beispiel 1 beschrieben mit 3 mmol Triisobutylaluminium.

Es wurden 190,4 g Polyethylen, entsprechend einer $KZA_{red}$ von 1236 g/mmol Ti•bar•h., mit folgenden Produktdaten erhalten:

MFI 190/5 : 25,5 g/10 min; $d_{50}$ : 275 $\mu$m
MFI 190/15 : 127,0 g/10 min; Schüttdichte : 360 g/dm³
MFR 15/5 : 5,0 ; Feinanteil : 4 % < 100 $\mu$m

### Beispiel 28

In einem 4 dm³-Rührgefäß wurden 500 mmol Magnesiumethylat in 900 cm³ der Benzinfraktion suspendiert. Die Suspension wurde mit 1 mol 2-Ethylhexanol versetzt. Bei 130°C wurde innerhalb von 16 Stunden 50 mmol Triethylaluminium zudosiert. Während dieser Zeit wurde das ausgetauschte Ethanol abdestilliert.

Zu der Lösung des Magnesiumbis(2-ethyl-1-hexyloxid) wurden bei 25°C in 2 h 150 mmol TiCl₄ in 500 cm³ der Benzinfraktion zudosiert. Bei 80°C erfolgte in 2 h die Zugabe von 500 mmol Ethylaluminiumsesquichlorid in 500 cm³ der Benzinfraktion.

Die Polymerisation erfolgte wie in Beispiel 1 beschrieben.

Es wurden 107,2 g Polyethylen, entsprechend einer $KZA_{red}$ von 696 g/mmol Ti•bar•h, mit folgenden Produktdaten erhalten:

MFI 190/5 : 36,5 g/10 min; $d_{50}$ : 575 $\mu$m
MFI 190/15 : 199,4 g/10 min; Schüttdichte : 290 g/dm³
MFR 15/5 : 5,5 ; Feinanteil : 0,3 % < 100 $\mu$m

### Beispiel 29

In einem 2 dm³-Rührgefäß wurden 250 mmol Magnesiumethylat in 300 cm³ der Benzinfraktion suspendiert. Die Suspension wurde mit 500 mmol 2-Ethylhexanol versetzt. Bei 130°C wurde innerhalb von 16 Stunden 55 mmol Triethylaluminium zudosiert. Während dieser Zeit wurde das ausgetauschte Ethanol abdestilliert. Danach wurden 500 cm³ der Benzinfraktion zugegeben.

Zu der Lösung des Magnesiumbis(2-ethyl-1-hexyloxid) wurden bei 20°C in 4 h 75 mmol TiCl₄ in 500 cm³ der Benzinfraktion zudosiert. Bei 20°C erfolgte in 2 h die Zugabe von 200 mmol Ethylaluminiumsesquichlorid in 500 cm³ der Benzinfraktion. Anschließend wurde der Ansatz noch 8 h bei 80°C gerührt.

Die Polymerisation erfolgte wie in Beispiel 1 beschrieben.

Es wurden 145,2 g Polyethylen, entsprechend einer $KZA_{red}$ von 943 g/mmol Ti•bar•h, mit folgenden Produktdaten erhalten:

MFI 190/5 : 21,8 g/10 min; $d_{50}$ : 270 $\mu$m
MFI 190/15 : 111,4 g/10 min; Schüttdichte : 350 g/dm³

MFR 15/5 : 5,1 ; Feinanteil : 3 % < 100 μm

## Ansprüche

1. Verfahren zur Herstellung eines Ethylenpolymers mit einheitlicher grober Partikelform und hoher Schüttdichte durch Polymerisation von Ethylen oder von Ethylen mit bis zu 10 Gew.-%, bezogen auf die Gesamtmenge der Monomeren, eines 1-Olefins der Formel $R^9$-CH$=$CH$_2$, worin $R^9$ einen geradkettigen oder verzweigten Alkylrest mit 1 bis 12 C-Atomen bedeutet, in Suspension, in Lösung oder in der Gasphase, bei einer Temperatur von 20 bis 120°C und einem Druck von 2 bis 60 bar, in Gegenwart eines Katalysators bestehend aus dem Reaktionsprodukt eines Magnesiumalkoholats mit einer vierwertigen Übergangsmetallverbindung und einer aluminiumorganischen Verbindung, dadurch gekennzeichnet, daß die Polymerisation durchgeführt wird in Gegenwart eines Katalysators, welcher aus

a) dem Gesamtprodukt aus der Reaktion

a1) eines in einem inerten Lösemittel gelösten Magnesiumalkoholats der Formel I
$Mg(OR^1)(OR^2)$ (I),
worin $R^1$ und $R^2$ entweder gleich sind und einen Rest -CH$_2$CHR$^6$R$^7$ oder -(CH$_2$)$_n$OR$^8$ bedeuten, wobei $R^6$ ein Wasserstoffatom oder ein $C_1$-$C_6$-Alkylrest, $R^7$ ein $C_2$-$C_6$-Alkylrest, $R^8$ ein $C_1$-$C_4$-Alkylrest und n eine ganze Zahl von 2 bis 6 ist, oder $R^1$ und $R^2$ verschieden sind, $R^1$ die vorgenannte Bedeutung hat und $R^2$ einen $C_1$-$C_{20}$-Alkylrest bedeutet, mit

a2) einer vierwertigen Übergangsmetallverbindung der Formel II
$MX_m(OR^3)_{4-m}$ (II),
worin M Titan, Zirkon oder Hafnium, $R^3$ einen $C_1$-$C_9$-Alkylrest und X ein Halogenatom bedeuten und m eine ganze Zahl von null bis 4 ist,

a3) einer aluminiumorganischen Verbindung der Formel III
$AlR^4_q(OR^5)_pX_{3-q-p}$ (III),
worin $R^4$ und $R^5$ gleich oder verschieden sind und einen $C_1$-$C_6$-Alkylrest, X ein Halogenatom, q eine Zahl von null bis 3 und p eine Zahl von null bis 1 bedeuten, im Verhältnis Mg:Ti:Al wie 1 zu 0,05 bis 2 zu 0,3 bis 4, und

b) einem Aluminiumtrialkyl mit 1 bis 6 C-Atomen in den Alkylresten oder dem Umsetzungsprodukt eines Aluminiumtrialkyls oder Aluminiumdialkylhydrids mit Isopren besteht.

2. Verfahren nach Anspruch 1, dadurch gekennzeichnet, daß bei der Herstellung der Komponente a als Komponente a4 ein aliphatischer oder alicyclischer Ether, ein aliphatischer Ester, ein aliphatischer Aldehyd oder eine aliphatische Carbonsäure als Elektronendonor eingesetzt wird.

3. Verfahren nach Anspruch 1, dadurch gekennzeichnet, daß das Magnesiumalkoholat der Formel I, die vierwertige Übergangsmetallverbindung der Formel II, die aluminiumorganische Verbindung der Formel III und der Elektronendonor im Verhältnis Mg:M:Al:ED wie 1 zu 0,05 bis 2 zu 0,3 bis 4 zu 0 bis 2 eingesetzt werden.